# EUROPEAN PATENT SPECIFICATION

(11) **EP 1 745 104 B1**
(45) Date of publication and mention of the grant of the patent: **02.11.2011**
(21) Application number: 05725345.2
(22) Date of filing: 10.03.2005
(51) Int. Cl.: C08L 63/00, C08L 63/02, C08L 39/00, C09D 11/10, C09D 11/00, C09D 11/02

(54) **COMB-LIKE POLYETHERALKANOLAMINES IN INKS**
KAMMARTIGE POLYETHERALKANOLAMINE IN TINTEN UND DRUCKFARBEN
EMPLOI DE POLYETHERALKANOLAMINES EN PEIGNES DANS DES ENCRES

(30) Priority: 13.05.2004 US 570600 P
(43) Date of publication of application: 24.01.2007
(73) Proprietor: Huntsman Petrochemical LLC, The Woodlands, TX 77380 (US)
(72) Inventor: KLEIN, Howard, P., Austin, Texas 78759 (US); NGUYEN, Duy, T., Austin, Texas 78717 (US); WHEWELL, Christopher, J., Georgetown, Texas 78628 (US)
(74) Representative: Van Steenlandt, Wim August Maria
(86) International application number: PCT/US2005/008126
(87) International publication number: WO 2005/113677

(56) References cited:
- US-A- 4 421 906
- US-A- 5 459 208
- US-A- 5 567 748
- US-A- 5 804 616
- US-A- 6 077 884
- US-A1- 2004 059 085
- US-B1- 6 303 672

## Description

### Field of the Invention

The present invention relates to a non-aqueous and aqueous pigmented inks wherein the pigment dispersant is a polyetheralkanolamine comb polymer. This invention also relates to aqueous pigmented inks which can be used in ink jet printers.

### Background Information

When a pigment is used as a colorant, an ink composition is prepared by mixing the concentrated pigment dispersion which contains pigment, dispersant and the like with water, resin, a water-soluble organic medium, and other ingredients. U.S Pat, No. 6,818,053 discloses a production process for producing a pigment dispersion comprising the steps of (a) providing a mixture consisting essentially of a pigment, a dispersant, a polysiloxane surfactant and/or an alkanediol, a polyhydric alcohol and water; and (b) dispersing the mixture to product the pigment dispersion. The patent also claims an ink composition prepared from the above pigment dispersion.

In pigmented ink compositions, the pigment dispersion is generally stabilized by a dispersant which serves to prevent the pigment particles from agglomerating and settling out of the carrier. U.S. Pat. No. 5,085,698 discloses an ink composition comprising pigment, aqueous medium, and an acrylic/acrylate block copolymer as a stabilizing agent. U.S. Pat. No. 5,589,522 employs a graft polymer comprising a hydrophilic polyacrylic acid backbone and hydrophobic segment side chains in an aqueous ink composition. U.S. Pat. No. 4,597,794 discloses an aqueous ink dispersion for ink jet printers in which pigment is contained in a polymer having ionic hydrophilic segments and aromatic hydrophobic segments that adhere to the pigment surface.

U.S Pat. No. 5,948,843 relates to a lithographic printing ink containing a dispersing agent of a reaction product of a styrene/maleic anhydride (SMA) copolymer and an alcohol as a pigment dispersant. U.S. Pat. No. 5,302,197 employs hydroxyl-terminated branched polymer off a short carbon chain in an ink jet ink.

While prior pigmented ink compositions showed acceptable stability for the pigment dispersion, improved pigment ink dispersion is still needed to further lower the ink viscosity, impart better print density, increase pigment loading, and lower degree of shear thinning after aging. It is therefore an object of the present invention to provide an improved pigmented ink composition.

### Summary of the Invention

One embodiment of the present invention relates to ink compositions which comprise: a) a solvent component; b) a pigment component; and c) an effective pigment-dispersing amount of a substantially water-soluble dispersant having the structure: 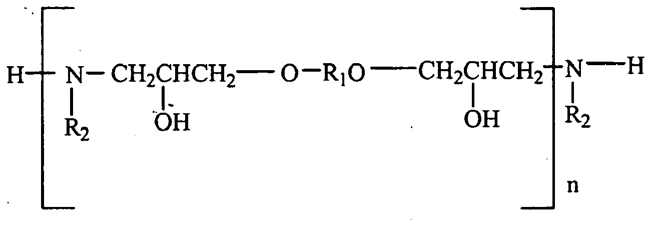 in which R₁ may be any C₁-C₁₀₀ aliphatic hydrocarbyl group; R₂ may be any alkoxylated hydrocarbyl group defined by the structure: 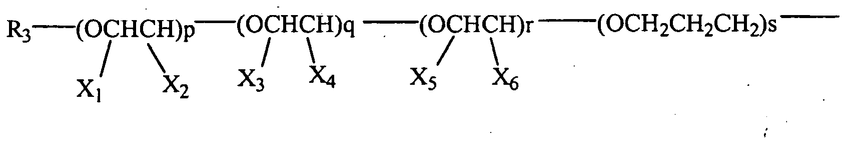 in which R₃ is any C₁ to about C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and about 100, including zero, subject to the proviso that at least one of p, q, and r is not zero; and wherein n is any integer between 1 and 50, and s is 0 or 1.

The solvent component is present in an amount of 70 w% to 99.8 w% based on the total weight of the ink composition. The dispersant is present in an amount between 0.5 w% and 25 w% based on the total weight of the pigment in the ink composition.

A polyetheralkanolamine comb polymer according to the present invention deflocculates pigments, and provides steric stabilization. Higher gloss and color strength are achieved due to the small particle sizes of the deflocculated pigments. In addition, the comb polymer of the present invention reduces viscosity, subsequently, which results in improved leveling is improved and higher pigment loading is possible.

### Detailled Description

An essential component of a finished liquid ink composition according to the present invention in a comb polymer made in accordance herewith serves to stabilize the pigment against agglomeration in the formulation.

A comb polymer suitable for use in an ink formulation according to one embodiment of the present invention is formed by reacting a monofunctional, amine-terminated polyether with a glycidyl ether of a polyol. The product resulting from such a process may be conveniently referred to as a polyetheralkanolamine. According to one preferred embodiment of the invention, the amine-terminated polyether (ATP) reactant is present in an amount sufficient to ensure that the total number of reactive hydrogen atoms on the nitrogen atom of the amine(s) present is at least stoichiometrically equal to the amount of epoxide groups present in all glycidyl ethers of a polyols present.

In another broad respect, the present invention provides a process which comprises reacting a monofunctional, amine-terminated polyether ("ATP") with a glycidyl ether of a polyol. A process according to the invention comprises reacting one or more epoxy resins (including without limitation Bisphenol A and its derivatives and analogs) with an ATP having a hydrophilic backbone (such as a polyethylene oxide (PEO) backbone) at elevated temperature, to afford a thermoplastic polyethanolamine having many hydrophilic branches. The polymer molecular weight and physical properties may be controlled by selection of raw materials and ratio of the two starting materials.

A polyethanolamine composition of the present invention may be prepared by reaction of a diglycidyl ether of Bisphenol A (or Bisphenol F) with a mono-functional polyetheramine having a molecular weight of 250 to 3500. The polyether (a.k.a. polyoxyalkylene) chain may be based on a polymer of ethylene oxide, propylene oxide, butylene oxide, or any combination of these materials, and may also include materials derived from cyanoethylated polyoxyalkylene glycols.

A reaction according to the invention, for forming the water-soluble comb materials herein described may take place at any temperature between about 50°C and 150° C. Reaction times vary independently, and may be any time between about 2 and about 10 hours. A comb polymer in one embodiment is preferably soluble in water to a degree of at least 5% by weight of the polymer in water. A comb polymer in another embodiment is preferably soluble in water to a degree of at least 10% by weight of the polymer in water. A comb polymer in one embodiment is preferably soluble in water to a degree of at least 15% by weight of the polymer in water. A comb polymer in another embodiment is preferably soluble in water to a degree of at least 20 % by weight of the polymer in water. A comb polymer in one embodiment is preferably soluble in water to a degree of at least 25% by weight of the polymer in water. A comb polymer in another embodiment is preferably soluble in water to a degree of at least 30 % by weight of the polymer in water. A comb polymer in one embodiment is preferably soluble in water to a degree of at least 35% by weight of the polymer in water. A comb polymer in another embodiment is preferably soluble in water to a degree of at least 40 % by weight of the polymer in water. A comb polymer in one embodiment is preferably soluble in water to a degree of at least 45% by weight of the polymer in water. A comb polymer in another embodiment is preferably soluble in water to a degree of at least 50 % by weight of the polymer in water. A comb polymer in one embodiment is miscible with water in all proportions.

A general reaction scheme for the preparation of a comb polymer according to one embodiment of the present invention is: 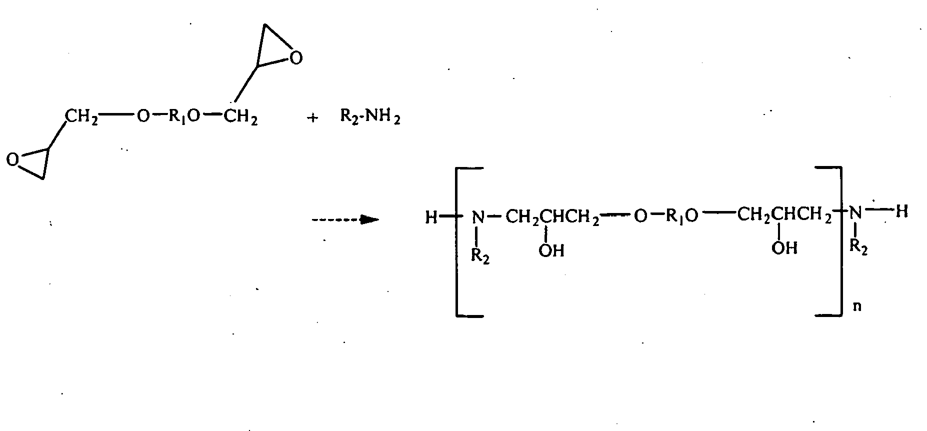 in which an epoxy resin containing at least two epoxy functional end groups is reacted with a primary amine. R₁ n the above reaction may be any C₁-C₁₀₀ hydrocarbyl group; thus the epoxy reactant may be any epoxy resin of at least a functionality of two, and includes without limitation the materials listed under the glycidyl ethers section of this specification. Further, it is easy for one of ordinary skill in the art to control the relative amounts of the raw materials used in forming a dispersant according to the present invention. In one embodiment, there is an excess of epoxy resin present, which results in dispersant molecules which are end-capped with epoxy groups. In another embodiment, there is excess amine used in forming the dispersants, which results in dispersant molecules which are end-capped with amine groups.

In the above equation, n is any integer between about 1 and about 50; R₂ may be any hydrocarbyl group which includes as a part of its molecular structure a portion containing at least two alkoxy groups linked to one another, i.e., the group R₂ may be a group: 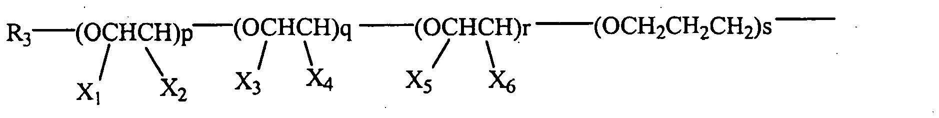 in which R₃ is any C₁ to about C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and about 100, including zero, subject to the proviso that at least one of p, q, and r is not zero, and s = 0 or 1.

### The Amine Component

Such a group R₂ as specified above may be incorporated into a polymeric dispersant of the invention by reaction of an amine having the structure: 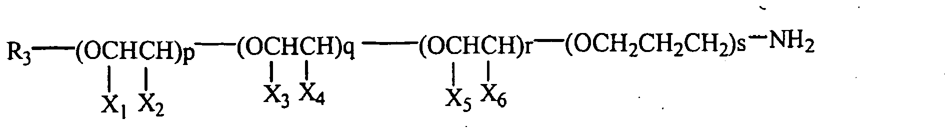 in which the variables are as defined above, with an epoxy resin having at least difunctionality, as previously specified. Thus, the above structures include R₂ groups that include both random and block polymers and co-polymers of ethylene oxide, propylene oxide, and butylene oxide. According to one preferred form of the invention, the molecular weight of the amine reactant is any molecular weight between about 100 and 12,000. In cases where mixtures of such amines are employed to produce a polymer provided herein, the preferred molecular weight will be an average molecular weight of all amines present, and it is recognized by those skilled in the art that the production of alkoxylated amines inherently results in the production of a mixture of amines.

Thus, the mono-functional, amine-terminated polyethers used in this invention include mono-amines having a molecular weight of from about 100 to about 12,000, which mono-amines include those marketed by Huntsman LLC of Houston, Texas under the trademarks JEFFAMINE® and SURFONAMINE®, as well as analogous compounds offered by other companies comprising polyoxyalkylenated primary amines. Preferred amine-terminated polyethers have a molecular weight of from about 1,000 to about 3,000. While these particular materials are methoxy terminated, the amine-terminated polyethers used in practice of this invention can be capped with any other groups in which the methyl group of the methoxy group is replaced with a hydrogen or higher hydrocarbon such as ethyl, propyl, butyl, etc., including any hydrocarbyl substituent which comprises up to about 18 carbons. It is especially preferred that the amine termination is a primary amine group. Thus, mono-functional amine-terminated polyethers useful in accordance with one embodiment of the present invention may have the general structure: 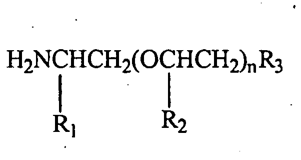 in which R₁ and R₂ are each independently selected from the group consisting of: hydrogen and any C₁ to C₄ hydrocarbyl group; R₃ is independently selected from the group consisting of: hydrogen, methyl, methoxy, ethoxy, and hydroxy; and wherein n is any integer in the range of between about 5 and 100, and including mixtures of isomers thereof. Such materials are available from Huntsman LLC of Houston, Texas.

### The Glycidyl Ether Component

The glycidyl ethers of polyols useful in providing a composition according to the present invention are generally known as "epoxy resins" which include various epoxy resins including conventional, commercially-available epoxy resins. In addition, mixtures including any two or more epoxy resins may be employed in any ratio of combination with one another to provide a mixture with which a primary amine as set forth herein may be reacted. In general, the epoxy resins can be glycidated resins, cycloaliphatic resins, epoxidized oils and so forth. The glycidated resins are frequently formed as the reaction product of a glycidyl ether, such as epichlorohydrin, and a bisphenol compound such as bisphenol A. C₂-C₂₈ alkyl glycidyl ethers; C₂-C₂₈ alkyl-and-alkenyl-glycidyl esters; C₁-C₂₈ alkyl-, mono- and poly-phenol glycidyl ethers; polyglycidyl ethers of pyrocatechol, resorcinol, hydroquinone, 4-4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxy-3,3'-dimethyldiphenyl propane, 4,4'-dihydroxydiphenyl sulfone, and tris (4-hydroxyphenyl) methane; polyglycidyl ethers of NOVOLAC® resins; polyglycidyl ethers of diphenols obtained by esterifying ethers of di-phenols obtained by esterifying salts of an aromatic hydrocarboxylic acid with a dihaloalkane or dihalogen dialkyl ether; polyglycidyl ethers of polyphenols obtained by condensing phenols and long chain halogen paraffins containing at least two halogen atoms; N,N'-diglycidyl-aniline; 4-glycidyloxy-N,N'-diglycidyl aniline; N,N'-dimethyl-N,N'-diglycidyl-4,4'-diaminodiphenyl methane; N,N,N',N'-tetraglycidyl-4,4'-diaminodiphenyl methane; N,N'-diglycidyl-4-aminophenyl glycidyl ether; and combination thereof. Commercially-available epoxy resins that can be used in the practice of this invention include but are not limited to ARALDITE® GY6010 resin (Huntsman Advanced Materials), ARALDITE® 6010 resin (Huntsman Advanced Materials), EPON® 828 resin (Resolution Polymers), and DER@ 331 resin (the Dow Chemical Co.). Heloxy^{™} 68, Eponex^{™} 1510, and ARALDITE® 0500.

In general the polymers of the present invention are obtained by reacting aromatic polyepoxides with monofunctional amine-terminated polyethers in excess of aromatic polyepoxides based on equivalent, wherein from about 40% to about 75% of the epoxide groups of the starting material are reacted and the epoxy equivalent : amine equivalent ratio is between 1.10:1 1 to 2.5:1. U.S. Patent No. 6,506,821 B1 discloses epoxy resins obtained by reacting aromatic polyepoxides with polyoxyalkyleneamines in an equivalent ratio (epoxy equivalent : amine equivalent) of between 3.6 :1 and 10:1. Since the epoxide group content of these resins is numerous, they are water insoluble and are not suitable as pigment dispersants. U.S. Application No. 20050020735 discloses a dispersant prepared by reacting (1) monofunctioral or polyfunctional aromatic epoxides; with (2) polyoxyalkylenemonoamines, wherein from 90% to 100% of the epoxide groups are reacted. The polymers of the present invention are also obtained by reacting aliphatic polyepoxides with monofunctional amine-terminated polyethers. However, we have unexpectedly found that when an excess of epoxy resin is utilized that the viscosities of pigmented formulations are far lower than what one would expect. In one preferred embodiment the ratio of epoxy groups to amino hydrogen atoms (hydrogens attached to a nitrogen atom of a primary amine) in a reactant mixture used to form a dispersant according to the present invention is in the range of between about 1.1 : 1 to 2.5 : 1. Such a provision ensures that less than 90% of the epoxy groups in the reactive mixture are reacted, which is especially beneficial when the epoxy component is aromatic to produce a material within this invention.

Thus, it will be seen and recognized by one of ordinary skill in the art that the R₁ group of a dispersant according to the present invention, as specified in claims 1 and 16 appended hereto, is a hydrocarbyl residue derived from a material as described above.

It is generally preferred that the amine-terminated polyether and glycidyl ether of a polyol are present in such amounts that the amine group of the polyether is able to be consumed by reacting with essentially all of the epoxide functionality of the glycidyl ether. Thus, during the reaction, the amount of amine-terminated polyether is stoichiometrically equal to or greater than the amount of epoxide in the glycidyl ether of a polyol. The resulting product has little if any unreacted epoxide functionality left after the reaction.

Depending on the starting amount used of a primary amine, it is possible to form either a secondary or tertiary amine in the final product. It is therefore possible to form products which contain repeating units where an ATP has reacted with two epoxide groups to form a tertiary amine. This result can be depicted by the following representative formula:

RNHCH₂CHOHCH₂-[-O-A-O-CH₂CHOHCH₂NRCH₂CHOHCH₂-O-]ₓ-A-O-CH₂CHOHCH₂-NRH

in which R represents the capped polyether portion of the ATP; A represents a hydrocarbyl radical, such as the hydrocarbon portion ofbisphenol A; and x can vary from 0 (if no tertiary amine present) to about 100. The reaction that forms such products is preferably conducted at any temperature in the range of between about 80°C to about 150°C, under ambient pressure.

A comb polymer component of an ink formulation according to the present invention typically comprises any amount between about 0.5 to about 25 % by weight, based on the total weight of all pigment solids present in the ink formulation. According to a preferred embodiment, the comb polymer component of an ink formulation according to the present invention typically comprises any amount between about 1% to about 10 % by weight, based on the total weight of all pigment solids present in the ink formulation.

The second component of an ink composition according to the present invention is the pigment component, which is typically an insoluble colorant material, such as phthalocyanine. However, a wide variety of organic and/or inorganic pigments may be present in an ink composition according to the present invention. Representative examples of inorganic pigments are carbon black, titanium oxides, and iron oxides. Representative examples of organic pigments are azo pigments (such as azo lakes, insoluble azo pigment, condensed azo pigments, and chelate azo pigments), polycyclic pigments (such as phthalocyanine pigments, perylenes and perylene pigments, anthraquinone pigments, quinacridone pigments, dioxazine pigments, thioindigo pigments, isoindolinone pigments, and quinophthalone pigments), lake pigments (such as base dye lakes, and acid dye lakes), nitro pigments, nitroso pigments, and aniline black daylight fluorescent pigments. Other pigments may also be used such as those that are dispersed in a water phase or those whose surfaces have been treated with a surfactant or a polymeric dispersing agent (such as graphite).

The amount of pigment present in an ink formulation according to the present invention may vary depending upon the structure, but they may be present in any amount ranging from about 1% to about 30%, and preferably from about 2% to about 10% by weight, based on the total weight of ink composition.

### Carrier Medium (Solvent) Component

The third component of an ink composition according to the present invention is the solvent, which is sometimes referred to as the carrier medium. The carrier medium can be either aqueous or non-aqueous. When aqueous, the carrier medium is water or comprises a mixture of water and at least one organic solvent which is soluble in water to an appreciable extent. One preferred water-soluble organic solvent comprises one or more polyhydric alcohols. Polyhydric alcohols include ethylene glycol, propylene glycol; diols such as butanediol, pentanediol. Glycols and glycol esters are also useful, and include those such as glycerol, propylene glycol laurate; polyalkyl glycols such as polyethylene glycol; and lower alkyl ethers of polyhydric alcohols, such as ethylene glycol monomethyl ether, ethylene glycol mono-ethyl ether and ethylene glycol mono-butyl ether.

Other suitable water-soluble organic solvents include lower alcohols and all their isomers having fewer than about 8 carbon atoms per molecule such as methanol, ethanol, propanol, iso-propanol; ketones such as acetone; ethers such as dioxane; esters such as ethyl acetate, propyl acetate, and lactams such as 2-pyrrolidone.

The amount of solvent present in an ink formulation according to the invention is any amount in the range of between about 50 % to about 99.8 %, preferably about 70 % to about 99.8% based on total weight of the ink. Selection of a particular ink composition as being suitable for a given final-use formulation depends on requirements of the specific application, such as desired surface tension and viscosity, the selected pigment, drying time of the pigmented ink jet ink, and type of paper onto which the ink will be printed, as is generally recognized or appreciated by those skilled in this art.

### Other Additives

An ink composition according to the present invention may be suitably prepared by combining the various components and mixing them in an ordinary kitchen blender. Optionally, a surfactant may be added to wet the pigment and modify the surface tension of the ink to control penetration of the ink into the paper. Examples of surfactants include nonionic, amphoteric, anionic, zwitterionic, and cationic surfactants, and those of ordinary skill in this art are aware of the surfactants employed in this field. Other additives such as binders (resins), biocides, humectants, chelating agents, viscosity modifiers, and defoamers may also be present in an ink composition according to the invention. Optionally, acrylic and non-acrylic polymers may be added to improve properties such as water fastness and smear resistance. These may be solvent based, emulsions, or water soluble polymers.

When employed in ink compositions, the polyetheralkanolamine comb polymers of the present invention de-flocculate pigments and provide steric stabilization. Higher gloss and color strength are achieved due to the small particle sizes of the deflocculated pigments. Leveling is seen to be improved and higher pigment loading is possible. As an added benefit, the comb polymers of the present invention reduce viscosity.

In a general sense, a primary amine from which a comb polymer according to the invention may be prepared is defined by the general formula: 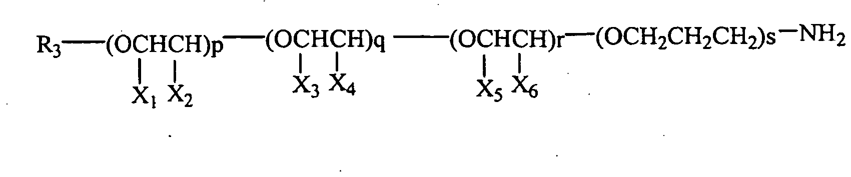 in which R₃ is any C₁ to about C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and about 100, including zero, subject to the proviso that at least one of p, q, and r is not zero, and s = 0 or 1. In the case where s = 0, the materials are the SURFONAMINE® amines available from Huntsman. To provide materials with s = 1, one reacts the desired polyoxyalkylated alcohol with acrylonitrile, and subsequently reduces the nitrile to the primary amine, as such technique for cyanoethylation is well-known in the art. Generally, one may pass a mixture of acrylonitrile (present in excess) and a 2000 molecular weight MPEG over an AMBERLYST® A-26 catalyst (NH₄OH on resin) in a suitable reactor at about 50°-60° C. The resulting effluent is stripped of any excess acrylonitrile, and the crude cyanoethylation product is induced in the presence of hydrogen over a cobalt catalyst at 150° - 200° C under a pressure of about 200psi. The final product is stripped of lights to yield a tan-brown solid having a melting point of about 50°-52° C.

The patent literature is filled with prior art on cyanoethylation techniques, including without limitation US Patent 6,794,530, and all references cited therein, which are herein incorporated by reference thereto.

The following examples are provided as illustrative examples of the invention and shall not be construed as delimitive of the scope of the present invention whatsoever.

### Preparation of Comb Polymers

### PREPARATION 1

To a small, wide mouth glass bottle is added SURFONAMINE^{™} L-100 amine having a molecular weight of 1000, and PO/EO ratio of 3/19 (100g, 0.2 mole equivalent), and EPONEX^{™} 1510 (a hydrogenated Bisphenol A resin, 45g, 0.2 mole equivalent). The mixture is swirled to a homogeneous off-white solution and placed in a 120°C oven for 7 hours. The final polymer is a solid at room temperature and is water soluble.

### PREPARATION 2

A molten 200 g of SURFONAMINE^{™} L-200 (0.2 equivalent) amine having an molecular weight of 2000 and a PO/EO ratio of about 2/42 is placed in a 1-liter flask equipped with a mechanical stirrer and thermometer. Then 45 g of EPONEX^{™} 1510 (0.2 equivalent) is added. The flask is heated to 130°C for 7 hours and then is lowered to 70°C, after which the product is discharged. The resulting polyethanolamine is a solid at room temperature and water soluble. It has a number average molecular weight of 2977 and weight average molecular weight of 5574. About 75% of the epoxide groups of the starting material are reacted.

### PREPARATION 3

To a small, wide mouth glass bottle is added SURFONAMINE^{™}. L-55 amine having a molecular weight of 500 and a PO/EO ratio of 2/9 (5g, 0.02 mole equivalent), and Heloxy^{™} 68 diglycidyl ether of neopentyl glycol, 2.7g, (0.02 mole equivalent). The mixture is swirled to yield a homogeneous off-white solution and placed in a 120°C oven for 3 hours. The final polymer is a viscous liquid at room temperature and is water soluble.

### PREPARATION 4

A molten 200 g of SURFONAMINE^{™} L-200 amine (0.2 equivalents) having a molecular weight of 2000 and a PO/EO ratio of about 2/42 is placed in a 1-liter flask equipped with a mechanical stirring, and thermometer. Then 33.75 g of Eponex^{™} 1510 (0.15 equivalents) is added. The flask is heated to 130°C for 7 hours and then is lowered to 70°C, after which the product is discharged. The resulting polyethanolamine is a solid at room temperature and water soluble. It has a number average molecular weight of 2940 and weight average molecular weight of 4805. About 96% of the epoxide groups of the starting material are reacted.

### PREPARATION 5

A molten 200 g of SURFONAMINE^{™} L-200 (0.2 equivalent) having a molecular weight of 2000 and a PO/EO ratio of about 2/42 is placed in a 1-liter flask equipped with a mechanical stirrer and thermometer. Then 56.25 g of Eponex^{™} 1510 ( 0.25 equivalents) is added. The flask is heated to 130°C for 7 hours and then is lowered to 70°C, after which the product is discharged. The resulting polyethanolamine is a solid at room temperature and water soluble. It has a number average molecular weight of 1925 and weight average molecular weight of 4271. About 64% of the epoxide groups of the starting material are reacted.

### PREPARATION 6

A molten 200 g of SURFONAMINE^{™} L-200 (0.2 equivalents) having a molecular weight of 2000 and a PO/EO ratio of about 2/42 is placed in a 1-liter flask equipped with a mechanical stirrer and thermometer. Then 47 g of ARALDITE^{™} GY6010 (a diglycidyl ether of bisphenol A, having 188 equivalent weight), 0.25 equivalents, is added. The flask is heated to 130°C for 7 hours and then is then lowered to 70°C, after which the product is discharged. The resulting polyethanolamine is a solid at room temperature and water soluble. It has a number average molecular weight of 2411 and weight average molecular weight of 5370. About 69% of the epoxide groups of the starting material are reacted.

### PREPARATION 7

A molten 200 g of SURFONAMINE^{™} L-200 (0.2 equivalent) having a molecular weight of 2000 and a PO/EO ratio of about 2/42 is placed in a 1-liter flask equipped with a mechanical stirrer and thermometer. Then 56.4 g of ARALDITE^{™} GY6010 diglycidyl ether (0.30 equivalents) is added. The flask is heated to 130°C for 7 hours and then is then lowered to 70°C, after which the product is discharged. The resulting polyethanolamine is a solid at room temperature and water soluble. It has a number average molecular weight of 1679 and weight average molecular weight of 4306. About 58% of the epoxide groups of the starting material are reacted.

### PREPARATION 8

A molten 200 g of SURFONAMINE^{™} L-200 (0.2 equivalents) having a molecular weight of 2000 and a PO/EO ratio of about 2/42 is placed in a 1-liter flask equipped with a mechanical stirrer and thermometer. Then 65.8 g of ARALDITE^{™} GY6010 (0.35 equivalents) is added. The flask is heated to 130°C for 7 hours and then is then lowered to 70°C, after which the product is discharged. The resulting polyethanolamine is a solid at room temperature and water soluble. It has a number average molecular weight of 1345 and weight average molecular weight of 3787. About 58% of the epoxide groups of the starting material are reacted.

### PREPARATION 9

A molten 164.1 grams of aminated methyl polyethylene glycol (AMPEG® 2000 glycol) having a molecular weight of about 2188 and about 49 moles of EO is placed in a 1-liter flask equipped with a mechanical stirrer and thermometer. Next, 42.3 grams of ARALDITE® GY6010 resin (0.225 eq.) is added. The flask is heated to 130° C for 7 hours and is then lowered to 70° C, after which the product is discharged.

### Comparative Examples

Below are described materials which are currently available commercially as being dispersants for use in inks and like formulations and suitable more or less, for various end-use applications:
Example 1: Styrene-methacrylate copolymer (MW ~ 12,000 and 30% styrene and 70% methacrylic acid by weight). This type of copolymer is mentioned in U.S Pat. No. 4,597,794;
Example 2: Styrene-methacrylate copolymer (MW~ 12,000 and 50% styrene and 50% methacrylic acid by weight). This type of copolymer is mentioned in U.S Pat. No. 4,597,794;
Example 3: Comb polymer of methacrylic acid/maleic anhydride/ SURFONAMINE® B-30 amine;
Example 4: SURFYNOL® CT-136 SURFACTANT, a surfactant for pigment grinding, supplied by Air Products Company;
Example 5: DISPERBYK-190 dispersant, a pigment dispersant, supplied by BYK-Chemie, Inc;
Example 6: SURFONAMINE^{®} L-100 amine, made and sold by Huntsman LLC of Texas;
Example 7: SURFONAMINE® L-200 amine, made and sold by Huntsman LLC of Texas;
Example 8: SURFONAMINE® L-300 amine, made and sold by Huntsman LLC of Texas;
Example 9: SURFONAMINE® L-207 amine, made and sold by Huntsman LLC of Texas;
Example 10: SURFYNOLO® CT-324 surfactant, a surfactant for pigment grinding, supplied by Air Products Company;
Example 11, material described in U.S. Patent Application # 20050020735, is prepared by providing a 200 g of molten SURFONAMINE^{™} L-207 amine (0.2 equivalent) having a molecular weight of 2000 and a PO/EO ratio of about 2/42 in a 1-liter round bottom flask equipped with a mechanical stirrer and thermometer. Then 37.6 g of ARALDITE^{™} GY6010 (0.2 eq.) is added. The flask is heated to 120°C for 7 hours and then is then lowered to 70°C, after which the product is discharged. The resulting polyethanolamine is a solid at room temperature and water soluble. It has a number average molecular weight of 4609 and weight average molecular weight of 6155. It has a surface tension of 51 dyne/cm at 100 ppm and about 88% of the epoxide groups of the starting material are reacted.

| *Premix (Pigment Concentrate) Formulations* | |
|---|---|
| PREPARATION OF PREMIX (PIGMENT CONCENTRATE) | |
| Formulation 1 | Weight % |
| | |
| Regal® 660R (carbon black) | 38.0 |
| Dispersant | 2.0* |
| Joncryl® 63 (30.5% of styrene acrylic | |
| Resin from S.C Johnson Polymer, binder) | 25.53 |
| Byk® 022(defoamer from BYK-Chemie) | 0.7 |
| Water | 33.77 |
| *Based on 100% active | |
| | |

| Formulation 2 | Weight % |
|---|---|
| | |
| Magruder® YE 1400 (yellow pigment) | 38.7 |
| Dispersant | 2.0* |
| Joncryl ®63 (30.5% of styrene acrylic | |
| Resin from S.C Johnson Polymer, binder) | 27 |
| Byk® 022(defoamer from BYK-Chemie) | 1.0 |
| Water | 31.3 |
| *Based on 100% active | |

The method of preparation of materials according to the above 2 formulations involved weighing the Joncryl® 63 binder, water, dispersant, into a beaker and mixed at low shear using a Silverson L4RT-A mixer until they were uniform. Then the pigment (carbon black or yellow pigment) was added in three portions and mixed well to wet the particles between additions. After complete incorporation of the pigment, this composition (termed the premix) was mixed for 10 minutes at high shear to begin the process of wetting and de-agglomeration of the pigment concentrates.

The following examples compare the viscosity of the present invention with the prior art.

### EXAMPLE 12

The viscosities of premix Formulation 2 using dispersants from Preparations 2-8, (present invention), Example 11, Example 1, Example 3, and Example 5 are shown in Table 1 below. As can be seen, our present invention is much more effective at dispersing yellow pigment than competitor products (Examples 1, 3, 5, and 11), as reflected by much lower viscosity.

**Table 1 - Viscosities of premix Formulation 2 at various shear rates.**

| **rpm** | **Ex 11** | **Ex 1** | **Ex 5** | **Ex 3** | **Prep2** | **Pre3** | **Prep4** | **Prep5** | **Prep6** | **Prep7** | **Prep8** | **Prep9** |
|---|---|---|---|---|---|---|---|---|---|---|---|---|
| | | | | | | | | | | | | |
| 1.5 | 22240 | 23360 | 19760 | 22720 | 6320 | 8680 | 10400 | 720 | 4040 | 520 | 230 | 3550 |
| 3 | 12280 | 12080 | 10120 | 12960 | 4200 | 5050 | 6600 | 650 | 2840 | 480 | 270 | 2080 |
| 6 | 7260 | 6740 | 5860 | 7400 | 2580 | 3060 | 4200 | 580 | 1730 | 460 | 260 | 1400 |
| 12 | 4250 | 3910 | 3630 | 4270 | 1700 | 1810 | 2600 | 485 | 1200 | 380 | 225 | 965 |
| 30 | 2224 | 2120 | 2020 | 2150 | 1070 | 990 | 1470 | 390 | 750 | 275 | 207 | 552 |
| 60 | 1320 | 1305 | 1238 | 1350 | 750 | - | 970 | 345 | 500 | 235 | 195 | 410 |

### EXAMPLE 13

The viscosities of premix Formulation 1 using dispersants from Preparation 2, 5 and Preparation 7, 8, (present invention), and Example 11 are shown in Table 2 below. As can be seen that our present invention is more effective at dispersing carbon black than the prior art, Example 11, as reflected by lower viscosity.

**Table 2 - Viscosities of premix Formulation 1 at various shear rates.**

| rpm | Ex 5 | Ex 11 | Prep 2 | Prep 5 | prep 7 | Prep 9 |
|---|---|---|---|---|---|---|
| 1.5 | 5640 | 780 | 280 | 240 | 220 | 500 |
| 3 | 3680 | 730 | 200 | 220 | 180 | 490 |
| 6 | 2320 | 665 | 190 | 185 | 190 | 480 |
| 12 | 1475 | 605 | 180 | 170 | 210 | 460 |
| 30 | 855 | 515 | 165 | 160 | 200 | 410 |
| 60 | | 462 | 157 | 150 | 190 | 344 |

### EXAMPLE 14

Preparation 7 was diluted down to 15% in water and aged in a 50°C oven for 4 days, after which its performance was compared to the fresh sample. Table 3 shows the results using Formulation 2. As can be seen, the aged sample performed as well as a fresh one, which evidences the stability of the dispersants under the conditions tested.

**table III - viscosity comparison of fresh vs. aged material**

| RPM | Fresh | Aged |
|---|---|---|
| 1.5 | 560 | 560 |
| 3 | 600 | 600 |
| 6 | 540 | 520 |
| 12 | 440 | 435 |
| 30 | 345 | 340 |
| 60 | 340 | 290 |

The present invention thus defines a whole new class of dispersant materials useful in formulating inks, coatings, and the like, including ink formulations comprising such dispersant materials as defined herein.

As used in this specification and the appended claims, the word "hydrocarbyl", when referring to a substituent or group is used in its ordinary sense, which is well-known to those skilled in the art. Specifically, it refers to a group having a carbon atom directly attached to the remainder of the molecule and having predominantly hydrocarbon character. Examples of hydrocarbyl substituents or groups include: (1) hydrocarbon (including e.g., alkyl, alkenyl, alkynyl) substituents, alicyclic (including e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical); (2) substituted hydrocarbon substituents, that is, substituents containing ncn-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy); (3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, preferably no more than one, non-hydrocarbon substituent wi" be present for every ten carbon atoms in the hydrocarbyl group; typically, there will be no non-hydrocarbon substituents in the hydrocarbyl group.)

## Claims

1. An ink composition, which composition comprises:
a) a solvent component;
b) a pigment component; and
c) an effective pigment-dispersing amount of a water-soluble dispersant having the structure: 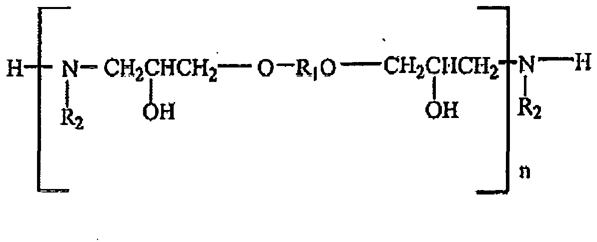
in which R₁ may be any C₁-C₁₀₀ aliphatic hydrocarbyl group; R₂ may be any alkoxylated hydrocarbyl group defined by the structure: 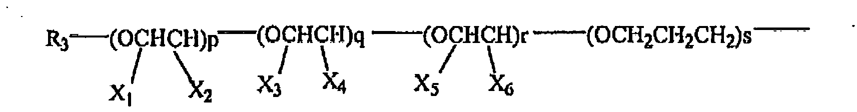 in which R₃ is selected from the group consisting of: hydrogen, and any C₁ to C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and 100, including zero, subject to the proviso that at least one of p, q, and r is not zero; n is any integer between 1 and 50; and s may be either 0 or 1, the solvent component being present in an amount of 70 w% to 99.8 w% based on the total weight of the ink composition, the dispersant being present in an amount between 0,5 w% and 25 w% based on the total weight of the pigment component in the ink composition.

2. A composition according to claim 1, wherein said composition includes an inorganic substance that is selected from the group consisting of: carbon black, titanium dioxide, and iron oxide.

3. A composition according to claim 1 wherein said pigment component comprises an organic pigment selected from the group consisting of: azo pigments, polycyclic pigments, base dye lake pigments, and acid dye lake pigments, nitro pigments, nitroso pigments, and aniline black daylight fluorescent pigments,

4. A composition according to claim 3 wherein said pigment comprises a polycyclic pigment selected from the group consisting of: phthalocyanine pigments, perylenes and perylene pigments, anthraquinone pigments, quinacridone pigments, dioxazine pigments, thioindigo pigments, isoindolinone pigments, and quinophthalone pigments

5. A composition according to claim 1 wherein said solvent component comprises water.

6. A composition according to claim 1 wherein said solvent comprises one or more organic solvents selected from the group consisting of: polyhydric alcohols; glycols; diols; glycol esters; glycol ethers; polyakryl glycols; lower alkyl ethers of polyhydric alcohols; alcohols having fewer than 8 carbon atoms per molecule; ketones; ethers; esters; and lactams.

7. A composition according to claim 1 wherein said solvent comprises one or more organic solvents selected from the group consisting of: ethylene glycol; propylene glycol; butanediol; pentanediol; glycerol; propylene glycol laurate; polyethylene glycol; ethylene glycol monomethyl ether, ethylene glycol mono-ethyl ether; ethylene glycol mono-butyl ether; alcohols having fewer than 8 carbon atoms per molecule such as methanol, ethanol, propanol, isopropanol; acetone; dioxane; ethyl acetate, propyl acetate, tertiary-butyl acetate, and 2-pyrrolidone.

8. An ink composition according to any foregoing claim wherein said ink appears as a color selected from the group consisting of: black, red, yellow, blue, green, and magenta when applied to a substrate and permitted to dry.

9. The use of an ink composition according to claim 1, which ink composition is either applied to or intended to be applied to a substrate which comprises cellulose or an olefin polymer.

10. An ink composition, which composition comprises:
a) a solvent component;
b) a pigment component; and
c) an effective pigment-dispersing amount of a water-soluble dispersant having the structure: 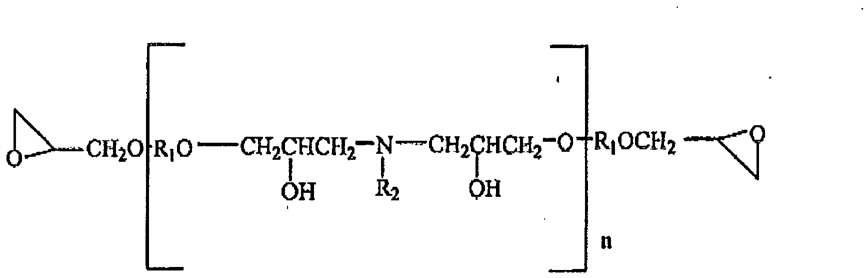
in which R₁ may be any C₁-C₁₀₀ aliphatic hydrocarbyl group; R₂ may be any alkoxylated hydrocarbyl group defined by the structure: 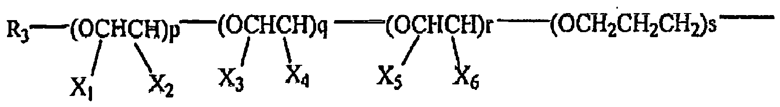 in which R₃ is selected from the group consisting of: hydrogen, and any C₁ to C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and 100, including zero, subject to the proviso that at least one of p, q, and r is not zero; n is any integer between 1 and 20; and s may be either 0 or 1, the solvent component being present in an amount of 70 w% to 99.8 w% based on the total weight of the ink composition, the dispersant being present in an amount between 0,5 w% and 25 w% based on the total weight of the pigment component in the ink composition.

11. A composition according to claim 10 wherein said composition includes an inorganic substance that is selected from the group consisting of: carbon black, titanium dioxide, and iron dioxide.

12. A composition according to claim 10 wherein said pigment component comprises an organic pigment selected from the group consisting of: azo pigments, polycyclic pigments, base dye lake pigments, and acid dye lake pigments, nitro pigments, nitroso pigments, and aniline black daylight fluorescent pigments.

13. A composition according to claim 12 wherein said pigment comprises a polycyclic pigment selected from the group consisting of: phthalocyanine pigments, perylenes and perylene pigments, anthraquinone pigments, quinacridone pigments, dioxazine pigments, thioindigo pigments, isoindolinone pigments, and quinophthalone pigments

14. A composition according to claim 10 wherein said solvent component comprises water.

15. A composition according to claim 10 wherein said solvent comprises one or more organic solvents selected from the group consisting of: polyhydric alcohols; glycols; diols; glycol esters; glycol ethers; polyakryl glycols; lower alkyl ethers of polyhydric alcohols; alcohols having fewer than 8 carbon atoms per molecule; ketones; ethers; esters; and lactams.

16. A composition according to claim 10 wherein said solvent comprises one or more organic solvents selected from the group consisting of: ethylene glycol; propylene glycol; butanediol; pentanediol; glycerol; propylene glycol laurate; polyethylene glycol; ethylene glycol monomethyl ether, ethylene glycol mono-ethyl ether; ethylene glycol mono-butyl ether; alcohols having fewer than 8 carbon atoms per molecule such as methanol, ethanol, propanol, isopropanol; acetone; dioxane; ethyl acetate, propyl acetate, tertiary-butyl acetate, and N-methyl-2-pyrrolidone.

17. An ink composition according to any of claims 10 to 16 wherein said ink appears as a color selected from the group consisting of: black, red, yellow, blue, green, and magenta when applied to a substrate and permitted to dry.

18. The use of an ink composition according to claim 10, which ink composition is either applied to or intended to be applied to a substrate which comprises cellulose or an olefin polymer.

## Patentansprüche

1. Tintenzusammensetzung, wobei die Zusammensetzung umfasst:
a) eine Lösungsmittelkomponente;
b) eine Pigmentkomponente und
c) eine wirksame Pigment dispergierende Menge eines wasserlöslichen Dispergiermittels, das die Struktur: 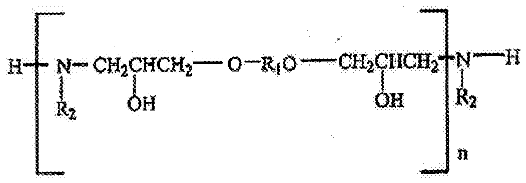
hat, worin R₁ eine beliebige aliphatische C₁-C₁₀₀-Hydrocarbyl-Gruppe sein kann; R₂ eine alkoxylierte Hydrocarbyl-Gruppe sein kann, die durch die Struktur: 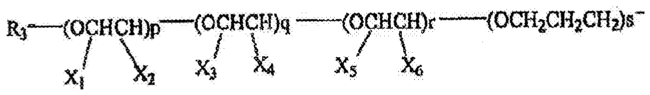 definiert wird, worin R₃ aus der Gruppe, bestehend aus Wasserstoff und einer beliebigen C₁- bis C₂₄-Hydrocarbyl-Gruppe, ausgewählt ist; X₁, X₂, X₃, X₄, X₅ und X₆ bei jedem Vorkommen unabhängig ausgewählt sind aus der Gruppe, bestehend aus Wasserstoff, Methyl und Ethyl, mit der Maßgabe, dass wenigstens eine der zwei X-Gruppen, die an dieselbe Alkoxyeinheit gebunden sind, Wasserstoff sind, p, q und r jeweils unabhängig eine ganze Zahl zwischen 0 und 100, einschließlich Null, sein können, mit der Maßgabe, dass wenigstens eines von p, q und r nicht Null ist; n eine ganze Zahl zwischen 1 und 50 ist und s entweder 0 oder 1 sein kann, wobei die Lösungsmittelkomponente in einer Menge von 70 Gew.-% bis 99,8 Gew.-%, bezogen auf das Gesamtgewicht der Tintenzusammensetzung, vorliegt, das Dispergiermittel in einer Menge zwischen 0,5 Gew.-% und 25 Gew.-%, bezogen auf das Gesamtgewicht der Pigmentkomponente in der Tintenzusammensetzung, vorliegt.

2. Zusammensetzung gemäß Anspruch 1, wobei die Zusammensetzung eine anorganische Substanz umfasst, die aus der Gruppe, bestehend aus Ruß, Titandioxid und Eisenoxid, ausgewählt ist.

3. Zusammensetzung gemäß Anspruch 1, wobei die Pigmentkomponente ein organisches Pigment, ausgewählt aus der Gruppe, bestehend aus: Azo-Pigmenten, polycyclischen Pigmenten, basischen Farbstofflack-Pigmenten und sauren Farbstofflack-Pigmenten, Nitro-Pigmenten, Nitroso-Pigmenten und bei Tageslicht fluoreszierenden Anilinschwarz-Pigmenten, umfasst.

4. Zusammensetzung gemäß Anspruch 3, wobei das Pigment ein polycyclisches Pigment umfasst, das aus der Gruppe, bestehend aus: Phthalocyanin-Pigmenten, Perylenen und Perylen-Pigmenten, Anthrachinon-Pigmenten, Chinacridon-Pigmenten, Dioxazin-Pigmenten, Thioindigo-Pigmenten, Isoindolinon-Pigmenten und Chinophthalon-Pigmenten, ausgewählt ist.

5. Zusammensetzung gemäß Anspruch 1, wobei die Lösungsmittelkomponente Wasser umfasst.

6. Zusammensetzung gemäß Anspruch 1, wobei das Lösungsmittel ein Lösungsmittel oder mehrere Lösungsmittel, ausgewählt aus der Gruppe, bestehend aus mehrwertigen Alkoholen, Glykolen; Diolen; Glykolestern, Glykolethern, Polyacrylglykolen, Niederalkylethern von mehrwertigen Alkoholen; Alkoholen, die weniger als 8 Kohlenstoffatome pro Molekül haben; Ketonen; Ethern; Estern und Lactamen, umfasst.

7. Zusammensetzung gemäß Anspruch 1, wobei das Lösungsmittel ein organisches Lösungsmittel oder mehrere organische Lösungsmittel, ausgewählt aus der Gruppe, bestehend aus: Ethylenglykol; Propylenglykol; Butandiol; Pentandiol; Glycerin; Propylenglykollaurat; Polyethylenglykol; Ethylenglykol-mono-methylether, Ethylenglykol-mono-ethylether; Ethylenglykol-mono-butylether; Alkoholen, die weniger als 8 Kohlenstoffatome pro Molekül haben, zum Beispiel Methanol, Ethanol, Propanol, Isopropanol; Aceton; Dioxan; Ethylacetat, Propylacetat, tertiär-Butylacetat und 2-Pyrrolidon, umfasst.

8. Tintenzusammensetzung gemäß einem vorangehenden Anspruch, wobei die Tinte als eine Farbe auftritt, die ausgewählt ist aus der Gruppe, bestehend aus Schwarz, Rot, Gelb, Blau, Grün und Magenta, wenn sie auf ein Substrat aufgetragen ist und trocknen gelassen wird.

9. Verwendung einer Tintenzusammensetzung gemäß Anspruch 1, wobei die Tintenzusammensetzung entweder auf ein Substrat, das Cellulose oder ein Olefinpolymer umfasst, aufgetragen wird oder aufgetragen werden soll.

10. Tintenzusammensetzung, wobei die Zusammensetzung umfasst:
a) eine Lösungsmittelkomponente;
b) eine Pigmentkomponente und
c) eine wirksame Pigment dispergierende Menge eines wasserlöslichen Dispergiermittels, das die Struktur: 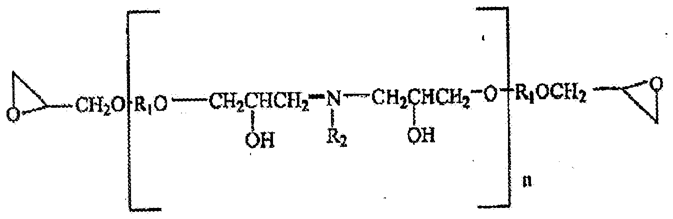
hat, worin R₁ eine beliebige aliphatische C₁-C₁₀₀-Hydrocarbyl-Gruppe sein kann; R₂ eine alkoxylierte Hydrocarbyl-Gruppe sein kann, die durch die Struktur: 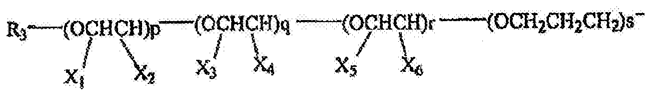 definiert wird, worin R₃ aus der Gruppe, bestehend aus Wasserstoff und einer beliebigen C₁-bis C₂₄-Hydrocarbyl-Gruppe, ausgewählt ist; X₁, X₂, X₃, X₄, X₅ und X₆ bei jedem Vorkommen unabhängig ausgewählt sind aus der Gruppe, bestehend aus Wasserstoff, Methyl und Ethyl, mit der Maßgabe, dass wenigstens eine der zwei X-Gruppen, die an dieselbe Alkoxyeinheit gebunden sind, Wasserstoff sind, p, q und r jeweils unabhängig eine ganze Zahl zwischen 0 und 100, einschließlich Null, sein können, mit der Maßgabe, dass wenigstens eines von p, q und r nicht Null ist; n eine ganze Zahl zwischen 1 und 20 ist und s entweder 0 oder 1 sein kann, wobei die Lösungsmittelkomponente in einer Menge von 70 Gew.-% bis 99,8 Gew.-%, bezogen auf das Gesamtgewicht der Tintenzusammensetzung, vorliegt, das Dispergiermittel in einer Menge zwischen 0,5 Gew.-% und 25 Gew.-%, bezogen auf das Gesamtgewicht der Pigmentkomponente in der Tintenzusammensetzung, vorliegt.

11. Zusammensetzung gemäß Anspruch 10, wobei die Zusammensetzung eine anorganische Substanz umfasst, die aus der Gruppe, bestehend aus Ruß, Titandioxid und Eisenoxid, ausgewählt ist.

12. Zusammensetzung gemäß Anspruch 10, wobei die Pigmentkomponente ein organisches Pigment, ausgewählt aus der Gruppe, bestehend aus: Azo-Pigmenten, polycyclischen Pigmenten, basischen Farbstofflackpigmenten und sauren Farbstofflackpigmenten, Nitro-Pigmenten, Nitroso-Pigmenten und bei Tageslicht fluoreszierenden Anilinschwarz-Pigmenten, ausgewählt ist, umfasst.

13. Zusammensetzung gemäß Anspruch 12, wobei das Pigment ein polycyclisches Pigment umfasst, das aus der Gruppe, bestehend aus: Phthalocyanin-Pigmenten, Perylenen und Perylen-Pigmenten, Anthrachinon-Pigmenten, Chinacridon-Pigmenten, Dioxazin-Pigmenten, Thioindigo-Pigmenten, Isoindolinon-Pigmenten und Chinophthalon-Pigmenten, ausgewählt ist.

14. Zusammensetzung gemäß Anspruch 10, wobei die Lösungsmittelkomponente Wasser umfasst.

15. Zusammensetzung gemäß Anspruch 10, wobei das Lösungsmittel ein Lösungsmittel oder mehrere Lösungsmittel, ausgewählt aus der Gruppe, bestehend aus mehrwertigen Alkoholen, Glykolen; Diolen; Glykolestern, Glykolethern, Polyacrylglykolen, Niederalkylethern von mehrwertigen Alkoholen; Alkoholen, die weniger als 8 Kohlenstoffatome pro Molekül haben; Ketonen; Ethern; Estern und Lactamen, umfasst.

16. Zusammensetzung gemäß Anspruch 10, wobei das Lösungsmittel ein organisches Lösungsmittel oder mehrere organische Lösungsmittel, ausgewählt aus der Gruppe, bestehend aus: Ethylenglykol; Propylenglykol; Butandiol; Pentandiol; Glycerin; Propylenglykollaurat; Polyethylenglykol; Ethylenglykol-mono-methylether, Ethylenglykol-mono-ethylether; Ethylenglykol-mono-butylether; Alkoholen, die weniger als 8 Kohlenstoffatome pro Molekül haben, zum Beispiel Methanol, Ethanol, Propanol, Isopropanol; Aceton; Dioxan; Ethylacetat, Propylacetat, tertiär-Butylacetat und 2-Pyrrolidon, umfasst.

17. Tintenzusammensetzung gemäß einem der Ansprüche 10 bis 16, wobei die Tinte als eine Farbe auftritt, die ausgewählt ist aus der Gruppe, bestehend aus Schwarz, Rot, Gelb, Blau, Grün und Magenta, wenn sie auf ein Substrat aufgetragen ist und trocknen gelassen wird.

18. Verwendung einer Tintenzusammensetzung gemäß Anspruch 10, wobei die Tintenzusammensetzung entweder auf ein Substrat, das Cellulose oder ein Olefinpolymer umfasst, aufgetragen wird oder aufgetragen werden soll.

## Revendications

1. Composition d'encre, composition qui comprend :
a) un constituant servant de solvant ;
b) un constituant du type pigment ; et
c) une quantité, efficace pour disperser le pigment, d'un dispersant hydrosoluble ayant la structure : 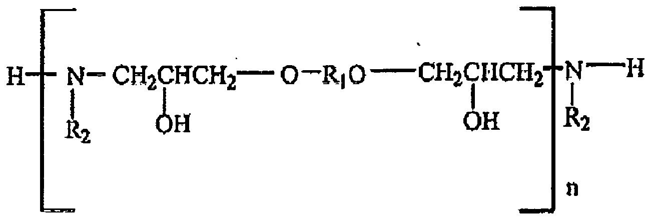
dans laquelle R₁ peut représenter n'importe quel groupe hydrocarbyle aliphatique en C₁ à C₁₀₀ ; R₂ peut représenter n'importe quel groupe hydrocarbyle alkoxylé défini par la structure : 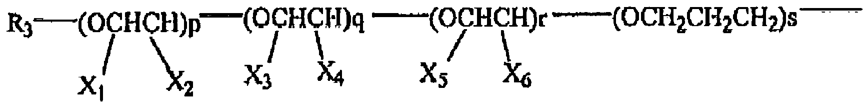 dans laquelle R₃ est choisi dans le groupe consistant en : un atome d'hydrogène, et n'importe quel groupe hydrocarbyle en C₁ à C₂₄ ; X₁, X₂, X₃, X₄, X₅ et X₆, à chaque occurrence, sont choisis indépendamment dans le groupe consistant en : un atome d'hydrogène, des groupes méthyle et éthyle, sous réserve qu'au moins un des deux groupes X, qui sont fixés au même motif alkoxy, représente un atome d'hydrogène, p, q et r peuvent représenter chacun indépendamment n'importe quel nombre entier de zéro à 100, y compris zéro, sous réserve qu'au moins un de p, q et r ne soit pas égal à zéro ; n représente n'importe quel nombre entier de 1 à 50 ; et s peut être égal à 0 ou 1, le constituant servant de solvant étant présente en une quantité de 70 % en poids à 99,8 % en poids sur la base du poids total de la composition d'encre, le dispersant étant présent en une quantité de 0,5 % en poids à 25 % en poids sur la base du poids total du constituant du type pigment dans la composition d'encre.

2. Composition suivant la revendication 1, ladite composition comprenant une substance inorganique qui est choisie dans le groupe consistant en le noir de carbone, le dioxyde de titane et l'oxyde de fer.

3. Composition suivant la revendication 1, dans laquelle ledit constituant du type pigment comprend un pigment organique choisi dans le groupe consistant en : des pigments azoïques, des pigments polycycliques, des pigments consistant en laques de colorants basiques, et des pigments consistant en laques de colorants acides, des pigments à fonction nitro, des pigments à fonction nitroso et des pigments fluorescents à la lumière du jour du type noir d'aniline.

4. Composition suivant la revendication 3, dans laquelle ledit pigment comprend un pigment polycyclique choisi dans le groupe consistant en : des pigments du type phtalocyanine, des pérylènes et des pigments du type pérylène, des pigments du type anthraquinone, des pigments du type quinacridone, des pigments du type dioxazine, des pigments du type thio-indigo, des pigments du type isoindolinone et des pigments du type quinophtalone.

5. Composition suivant la revendication 1, dans laquelle ledit constituant servant de solvant comprend l'eau.

6. Composition suivant la revendication 1, dans laquelle ledit solvant comprend un ou plusieurs solvants organiques choisis dans le groupe consistant en : des alcools polyhydroxyliques, des glycols, des diols, des esters de glycols, des éthers de glycols, des polyalkylglycols, des éthers alkyliques inférieurs d'alcools polyhydroxyliques, des alcools ayant moins de 8 atomes de carbone par molécule, des cétones, des éthers, des esters et des lactames.

7. Composition suivant la revendication 1, dans laquelle ledit solvant comprend un ou plusieurs solvants organiques choisis dans le groupe consistant en : l'éthylèneglycol, le propylèneglycol, le butanediol, le pentanediol, le glycérol, le laurate de propylèneglycol, le polyéthylèneglycol, l'éther monométhylique d'éthylène-glycol, l'éther monobutylique d'éthylèneglycol, des alcools ayant moins de 8 atomes de carbone par molécule tels que le méthanol, l'éthanol, le propanol, l'isopropanol, l'acétone, le dioxanne, l'acétate d'éthyle, l'acétate de propyle, l'acétate de tertio-butyle et la 2-pyrrolidone.

8. Composition d'encre suivant l'une quelconque des revendications précédentes, dans laquelle ladite encre présente une couleur choisie dans le groupe consistant en : noir, rouge, jaune, bleu, vert et magenta lors de l'application à un substrat et après séchage.

9. Utilisation d'une composition d'encre suivant la revendication 1, composition d'encre qui est appliquée ou est destinée à être appliquée à un substrat qui comprend de la cellulose ou un polymère oléfinique.

10. Composition d'encre, composition qui comprend :
a) un constituant servant de solvant ;
b) un constituant du type pigment ; et
c) une quantité, efficace pour disperser le pigment, d'un dispersant hydrosoluble ayant la structure : 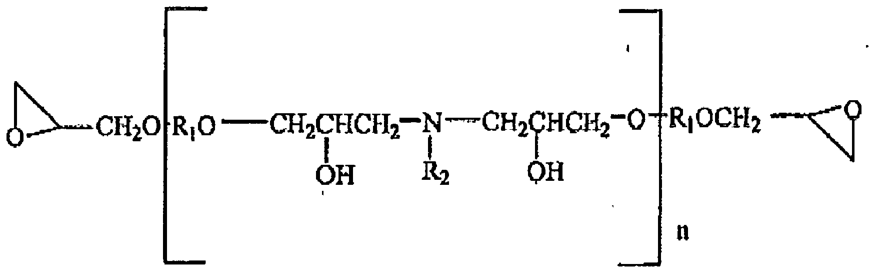
dans laquelle R₁ peut représenter n'importe quel groupe hydrocarbyle, aliphatique en C₁ à C₁₀₀, R₂ peut représenter n'importe quel groupe hydrocarbyle alkoxylé défini par la structure : 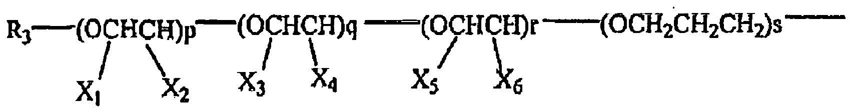 dans laquelle R₃ est choisi dans le groupe consistant en : un atome d'hydrogène, et n'importe quel groupe hydrocarbyle en C₁ à C₂₄ ; X₁, X₂, X₃, X₄, X₅ et X₆, à chaque occurrence, sont choisis indépendamment dans le groupe consistant en : un atome d'hydrogène, des groupes méthyle et éthyle, sous réserve qu'au moins un des deux groupes X, qui sont fixés au même motif alkoxy, représente un atome d'hydrogène, p, q et r peuvent représenter chacun indépendamment n'importe quel nombre entier de zéro à 100, y compris zéro, sous réserve qu'au moins un de p, q et r ne soit pas égal à zéro ; n représente n'importe quel nombre entier de 1 à 20 ; et s peut être égal à 0 ou 1, le constituant servant de solvant étant présente en une quantité de 70 % en poids à 99,8 % en poids sur la base du poids total de la composition d'encre, le dispersant étant présent en une quantité de 0,5 % en poids à 25 % en poids sur la base du poids total du constituant du type pigment dans la composition d'encre.

11. Composition suivant la revendication 10, ladite composition comprenant une substance inorganique qui est choisie dans le groupe consistant en : le noir de carbone, le dioxyde de titane et le dioxyde de fer.

12. Composition suivant la revendication 10, dans laquelle ledit constituant du type pigment comprend un pigment organique choisi dans le groupe consistant en : des pigments azoïques, des pigments polycycliques, des pigments consistant en laques de colorants basiques et des pigments consistant en laques de colorants acides, des pigments à fonction nitro, des pigments à fonction nitroso et des pigments fluorescents à la lumière du jour du type noir d'aniline.

13. Composition suivant la revendication 12, dans laquelle ledit pigment comprend un pigment polycyclique choisi dans le groupe consistant en : des pigments du type phtalocyanine, des pérylènes et des pigments du type pérylène, des pigments du type anthraquinone, des pigments du type quinacridone, des pigments du type dioxazine, des pigments du type thio-indigo, des pigments du type isoindolinone et des pigments du type quinophtalone.

14. Composition suivant la revendication 10, dans laquelle ledit constituant servant de solvant comprend l'eau.

15. Composition suivant la revendication 10, dans laquelle ledit solvant comprend un ou plusieurs solvants organiques choisis dans le groupe consistant en : des alcools polyhydroxyliques, des glycols, des diols, des esters de glycols, des éthers de glycols, des polyalkylglycols, des éthers alkyliques inférieurs d'alcools polyhydroxyliques, des alcools ayant moins de 8 atomes de carbone par molécule, des cétones, des éthers, des esters et des lactames.

16. Composition suivant la revendication 10, dans laquelle ledit solvant comprend un ou plusieurs solvants organiques choisis dans le groupe consistant en : l'éthylèneglycol, le propylèneglycol, le butanediol, le pentanediol, le glycérol, le laurate de propylèneglycol, le polyéthylèneglycol, l'éther monométhylique d'éthylèneglycol, l'éther monoéthylique d'éthylèneglycol, l'éther monobutylique d'éthylèneglycol, des alcools ayant moins de 8 atomes de carbone par molécule tels que le méthanol, l'éthanol, le propanol, l'isopropanol, l'acétone, le dioxanne, l'acétate d'éthyle, l'acétate de propyle, l'acétate de tertio-butyle et la N-méthyl-2-pyrrolidone.

17. Composition d'encre suivant l'une quelconque des revendications 10 à 16, dans laquelle ladite encre présente une couleur choisie dans le groupe consistant en : noir, rouge, jaune, bleu, vert, et magenta lors de l'application à un substrat et après séchage.

18. Utilisation d'une composition d'encre suivant la revendication 10, composition d'encre qui est appliquée ou destinée à être appliquée à un substrat qui comprend de la cellulose ou un polymère oléfinique.
